# EUROPÄISCHE PATENTSCHRIFT

(11) **EP 4 085 760 B1**
(45) Veröffentlichungstag und Bekanntmachung des Hinweises auf die Patenterteilung: **28.01.2026**
(21) Anmeldenummer: 22170835.7
(22) Anmeldetag: 29.04.2022
(51) Int. Cl.: A01K 13/00

(54) **INSEKTENSCHUTZMASKE FÜR EQUIDEN**
INSECT PROTECTION MASK FOR EQUIDS
MASQUE DE PROTECTION CONTRE LES INSECTES POUR ÉQUIDÉS

(30) Priorität: 03.05.2021 DE 102021111391
(43) Veröffentlichungstag der Anmeldung: 09.11.2022
(73) Patentinhaber: Busse Sportartikel GmbH & Co. KG, 49393 Lohne (DE)
(72) Erfinder: KÜHNEL, Marion, 31608 Marklohe (DE)
(74) Vertreter: Hoefer & Partner Patentanwälte mbB

(56) Entgegenhaltungen:
- DE-A1- 102009 001 432
- DE-U1- 202009 003 177
- US-A- 5 440 864
- US-A1- 2007 169 444
- US-B2- 7 100 349

## Beschreibung

Die Erfindung betrifft eine Insektenschutzmaske für Equiden, die sich durch eine sehr gute und dauerhaft am Equiden anordenbare Passform auszeichnet.

Equiden und hierunter insbesondere Pferde und Esel, die in Weidehaltung gehalten werden, leiden im Sommer häufig unter Fliegen und Mücken. Fliegen und Mücken befallen dabei zumeist die Augen, Nasen und Ohren der Tiere, was zu Unruhe der Tiere bis hin zu Entzündungen dieser Körperteile führen kann. Häufig entwickeln die Equiden auch Allergien gegen diese Insekten, so dass sie am besten dauerhaft geschützt werden sollten.

Aus dem Stand der Technik sind Fliegenmasken bekannt, die aus mehr oder weniger stabilen Materialien bestehen, deren Augenpartie durch netzartige Materialien semitransparent ausgebildet ist. Aufgrund der vielen verschiedenen Größen und Kopfformen der Equiden, ist es nahezu unmöglich eine spezifische Form für alle Equiden bereitzustellen. Die Fliegenmasken verfügen daher manchmal über ein- oder zwei Klettverschlüsse, die im unteren Bereich der Fliegenmaske, der an den Unterkieferästen zu liegen kommt, mittig angebracht sind und dort zwei Längsseiten der Fliegenmaske miteinander verbinden. Die Klettstreifen sind dabei relativ lang ausgebildet, um eine lockere oder engere Passform einzustellen. Die Klettstreifen sind jedoch flach auf den Stoff der Fliegenmaske aufgenäht, so dass sich eine starre Verbindung zwischen den Längsseiten der Fliegenmaske ergibt. Wird die Einstellung zu locker gewählt, streift sich der Equide z.B. beim Kratzen oder Wälzen die Fliegenmaske ab. Wird die Einstellung daher enger gewählt, bilden sich oft Scheuerstellen, da die enge Einstellung kein ausreichendes Öffnen und Schließen des Kiefers ermöglicht, was für die Futteraufnahme unerlässlich ist.

US 7,100,349 B2 beschreibt eine Schutzmaske zum Schutz von Pferden vor Insekten, die am Zaumzeug des Pferdes befestigt wird. Die Schutzmaske besteht aus einem Abdeckelement, das sich zwischen dem Stirnriemen, dem Nasenriemen und den Backenstücken des Zaumzeugs erstreckt. Die Schutzmaske wird durch Befestigungsvorrichtungen lösbar am Zaumzeug befestigt. Am Zaumzeug befestigt, können die Ränder der Maske entweder über oder unter dem entsprechenden Teil des Zaumzeugs positioniert werden. Zwei Abnäher halten die Schutzmaske von den Augen des Pferdes fern. Elastische Teile der Maske ermöglichen einen festen Sitz zwischen der Maske und dem Zaumzeug, während die Schutzmaske getragen wird.

US 5,440,864 A offenbart eine Insektenbekämpfungsvorrichtung für Tiere mit einem Materialstück zum Abdecken der Augen und benachbarter Teile des Tieres. Das Materialstück umfasst eine einstellbare Ohröffnung, die in einem oberen Rand ausgebildet ist, und einen Klettverschluss und einen Schlaufenverschluss, die an einer Konvergenz eines rechten Seitenrands und eines unteren Rands und eines linken Seitenrands und des unteren Rands befestigt sind, um eine einstellbare Halsöffnung und eine verstellbare Nasenöffnung zu definieren.

US 2007/169444 A1 lehrt einen Fliegenschutz zum Abdecken des Kopfes eines Pferdes, um das Pferd vor Fliegen oder anderen schädlichen Stoffen zu schützen, der durch zwei große Kammern gekennzeichnet ist, die die Augen des Pferdes aufnehmen, und ein Paar Ohrhauben, um die Ohren des Pferdes auf flexible Weise aufzunehmen, und eine verstellbare Befestigungsvorrichtung. Dadurch ist der offenbarte Fliegenschutz in der Lage, dem Pferd sowohl Schutz als auch Komfort zu bieten.

Es ist eine Aufgabe der Erfindung eine Insektenschutzmaske für Equiden bereitzustellen, die einerseits variabel an die jeweilige Kopfform des Equiden angepasst werden kann und andererseits auch bei Aktion des Equiden verrutschfest am Kopf des Equiden anordenbar ist. Die Lösung dieser Aufgabe erfolgt durch die Merkmale des Hauptanspruchs. Die Unteransprüche haben bevorzugte Ausführungsformen und Weiterbildungen der Erfindung zum Inhalt.

Erfindungsgemäß umfasst die Insektenschutzmaske für Equiden eine erste Einstellvorrichtung zum Einstellen eines Umfangs der Insektenschutzmaske. Die Einstellvorrichtung ist im Einzelnen nicht beschränkt, dient aber dazu, den Umfang in einem bestimmten Bereich der Insektenschutzmaske variabel einzustellen, also den Umfang bei Bedarf zu erweitern oder zu verringern und damit die Insektenschutzmaske passgenau auf die Kopfform des Equiden anzupassen.

Die erste Einstellvorrichtung umfasst an einem in Umfangsrichtung ersten Teilabschnitt der Insektenschutzmaske ein elastisches Band und an einem in Umfangsrichtung zweiten Teilabschnitt der Insektenschutzmaske, eine erste Arretiervorrichtung. Der erste Teilabschnitt und der zweite Teilabschnitt sind im Wesentlichen nicht beschränkt. Vorzugsweise liegen der erste Teilabschnitt und der zweite Teilabschnitt, in Längsrichtung der Insektenschutzmaske gesehen, in etwa auf derselben Höhe.

Das elastische Band ist vorzugsweise wenige Millimeter bis wenige Zentimeter breit, um eine gute Druckverteilung am Kopf des Equiden zu erzielen. Ein ersten Endabschnitt des elastischen Bands ist am ersten Teilabschnitt befestigt. Ein zweiter Endabschnitt des elastischen Bands ist nicht mit der Insektenschutzmaske fest verbunden und ist ausgebildet, entlang des Umfangs der Insektenschutzmaske zum, die Arretiervorrichtung umfassenden, zweiten Teilabschnitt geführt zu werden. Auch die Länge des elastischen Bands im ungedehnten Zustand kann entsprechend ausgewählt sein. So kann sich das elastische Band entlang des gesamten Umfangs der Insektenschutzmaske erstrecken. Das elastische Band kann sich aber auch nur über Teilbereiche des Umfangs der Insektenschutzmaske, wie beispielsweise über 1/6 bis 5/6 des Umfangs der Insektenschutzmaske, erstrecken. Je weiter entlang des Umfangs sich das elastische Band erstreckt, desto gleichmäßiger lässt sich die Umfangsweite der Insektenschutzmaske einstellen und lokale Druckstellen werden besonders gut verhindert. In einer weiteren Ausführungsform erstreckt sich das elastische Band daher nahezu vollständig entlang des Umfangs der Insektenschutzmaske, da somit die Umfangsweite in jedem Abschnitt des Umfangs der Insektenschutzmaske gleichmäßig einstellbar ist.

Eine Länge des elastischen Bands wird dabei durch die erste Arretiervorrichtung fixiert. Zunächst wird demnach bei Anwendung der Insektenschutzmaske am Equiden das am ersten Teilabschnitt vorhandene elastische Band der ersten Einstellvorrichtung soweit gedehnt, dass der Umfang der Insektenschutzmaske auf ein gewünschtes Maß reduziert wird. Sodann wird das Band so mittels der am zweiten Teilabschnitt vorhandenen Arretiervorrichtung fixiert, dass ein erneutes Zusammenschrumpfen des elastischen Bands auf die Ursprungslänge verhindert wird und somit der Umfang der Insektenschutzmaske dauerhaft verkürzt bleibt. Vorzugsweise liegen dabei der erste Teilabschnitt und der zweite Teilabschnitt in Umfangsrichtung der Insektenschutzmaske benachbart zueinander und das elastische Band erstreckt sich entlang des gesamten ersten Teilabschnitts, wobei ein Teilbereich des elastischen Bands so mit dem ersten Teilabschnitt verbunden ist, dass auf das elastische Band ein Zug ausgeübt werden kann, durch den das elastische Band in der Länge expandiert, wodurch die Umfangslänge der Insektenschutzmaske im Bereich der ersten Einstellvorrichtung reduziert und damit auf die Kopfform des Equiden angepasst werden kann.

Die erste Arretiervorrichtung ist im Einzelnen nicht beschränkt, dient aber vorzugsweise einer reversiblen Fixierung des elastischen Bands, um auch ein Abnehmen der Insektenschutzmaske vom Kopf des Equiden zu erleichtern.

Erfindungsgemäß ist das elastische Band und kann die erste Arretiervorrichtung in einem Saum geführt, so dass ein ungewolltes Lösen des elastischen Bands von der Arretiervorrichtung effektiv verhindert und etwaige Verletzungen bei Gebrauch der Insektenschutzmaske noch besser vermieden werden können. Zudem wird durch ein Führen insbesondere des elastischen Bandes durch einen Saum ein entlang der Umfangslänge sich gleichmäßig reduzierender Umfang ermöglicht, so dass ein gleichmäßiger Zug und damit ein besonders gleichmäßiges Anliegen der Insektenschutzmaske am Kopf des Equiden möglich ist.

Aufgrund der sehr einfachen Anwendung und reversiblen Verschließbarkeit, umfasst die erste Arretiervorrichtung vorzugsweise einen Knopf, einen Stift, eine Klammer, einen Haken oder einen Klettverschluss.

Gemäß einer vorteilhaften Weiterbildung umfasst die erste Arretiervorrichtung einen Knopf und der Knopf ist ein erster Druckknopf, wobei ein Unterteil oder ein Oberteil des ersten Druckknopfes am zweiten Teilabschnitt angeordnet ist. Das entsprechende Oberteil bzw. Unterteil des ersten Druckknopfes kann auf dem Unterteil bzw. Oberteil platziert werden. Somit kommen bei bestimmungsgemäßem Gebrauch das Oberteil und Unterteil des ersten Druckknopfes übereinander zu liegen. Das elastische Band kann beispielsweise mittels einer Lasche um den Druckknopf geführt und damit in seiner Länge fixiert werden.

Gemäß einer alternativen vorteilhaften Weiterbildung ist die erste Arretiervorrichtung ein Klettverschluss und eine erste Haftseite des Klettverschlusses ist am zweiten Teilabschnitt angeordnet und das elastische Band umfasst eine zweite Haftseite des Klettverschlusses. Gemäß dieser Ausführungsform kann die erste Einstellvorrichtung, also insbesondere das elastische Band, z.B. zwischen die erste Haftseite des Klettverschlusses und zwischen eine zweite Haftseite des Klettverschlusses geführt und somit zwischen den beiden Haftseiten in der Länge fixiert werden.

Vorzugsweise ist das elastische Band ein Lochband. Unter einem Lochband wird gemäß der vorliegenden Erfindung ein elastisches Band mit Öffnungen in Dickenrichtung des Bandes verstanden. Die Öffnungen, also Löcher im Band, können eine beliebige Form aufweisen und sind vorzugsweise so ausgebildet, dass die Arretiervorrichtung durch diese Öffnungen führbar ist. Vorzugsweise sind die Löcher schlitzförmig. Vielmehr sind entlang einer Länge des Lochbands, das sich in Umfangsrichtung der Insektenschutzmaske erstreckt, mehrere Öffnungen vorhanden, was ein besonders variables Einstellen und Anpassen des Umfangs der Insektenschutzmaske ermöglicht.

Besonders vorteilhaft ist das elastische Band ein Lochband und die erste Arretiervorrichtung ist ein Knopf, ein Stift, eine Klammer oder ein Haken, wobei der Knopf, der Stift, die Klammer oder der Haken durch ein Loch im Lochband zum Fixieren der Länge des elastischen Bands führbar ist. Hierdurch wird auf sehr einfache Art und Weise eine reversible Fixierung der Länge des elastischen Bands und damit der Umfangsweite der Insektenschutzmaske ermöglicht.

Beispielhaft kann der Knopf als Druckknopf ausgeführt sein, wobei ein Oberteil oder ein Unterteil des Druckknopfes am zweiten Teilabschnitt angeordnet ist und damit als Fixierpunkt dient, und ein entsprechendes Unterteil oder Oberteil des Druckknopfes am ersten Teilabschnitt angeordnet ist. Vorzugsweise ist vorgesehen, dass das entsprechende Unterteil oder Oberteil des Druckknopfes so am ersten Teilabschnitt angeordnet bzw. befestigt ist, dass es separat vom elastischen Band zum Oberteil oder Unterteil des Druckknopfes am zweiten Teilabschnitt führbar ist. Somit kann durch Zug am elastischen Band die gewünschte Umfangslänge der Insektenschutzmaske eingestellt werden und diese dann separat durch Übereinanderlegen und Fixieren des Oberteils und des Unterteils des Druckknopfes fixiert werden, wodurch der erste Teilabschnitt und der zweite Teilabschnitt benachbart zueinander oder sogar übereinander zu liegen kommen.

Ferner vorteilhaft umfasst die Insektenschutzmaske eine Schließvorrichtung, die die Insektenschutzmaske in Längsrichtung teilt bzw. verbindet. Insbesondere werden durch Schließen der Schließvorrichtung eine erste Seite und eine zweite Seite der Insektenschutzmaske miteinander verbunden.

Vorzugsweise ist die Schließvorrichtung dabei so angebracht, dass die Insektenschutzmaske von einer Oberseite des Kopfes des Equiden über dessen Kopf gelegt und dann an der Unterseite des Kopfes mittels der Schließvorrichtung in Längsrichtung des Kopfes verschlossen werden kann. Dies erleichtert ein Anlegen der Insektenschutzmaske und auch ein Abnehmen derselben. Besonders vorteilhaft liegt die Schließvorrichtung im geschlossenen Zustand zwischen den Unterkieferästen des Equiden, da sie somit am wenigsten störend angeordnet ist.

Besonders vorteilhaft im Lichte einer zusätzlichen Stabilisierung des geschlossenen Zustandes der Schließvorrichtung, und damit eines Verhinderns eines ungewollten Öffnens der Insektenschutzmaske, ist das elastische Band und/oder die erste Arretiervorrichtung im geschlossenen Zustand der Schließvorrichtung über die Schließvorrichtung geführt.

Vorzugsweise sind im geschlossenen Zustand der Schließvorrichtung die erste Seite und die zweite Seite der Insektenschutzmaske durch die Schließvorrichtung miteinander verbunden, wobei ein erster Verschlussteil der Schließvorrichtung entlang eines Randes der ersten Seite in Längsrichtung der Insektenschutzmaske angeordnet ist und ein zum ersten Verschlussteil korrespondierendes zweites Verschlussteil der Schließvorrichtung entlang eines Randes der zweiten Seite in Längsrichtung der Insektenschutzmaske angeordnet ist. Die Insektenschutzmaske ist somit in Längsrichtung an den jeweiligen Rändern der ersten Seite und der zweiten Seite der Insektenschutzmaske miteinander, vorzugsweise reversibel verbindbar, um ein Anlegen und Abnehmen der Insektenschutzmaske am Kopf des Equiden zu erleichtern.

Weiter vorteilhaft sind das elastische Band und die erste Arretiervorrichtung auf der ersten Seite der Insektenschutzmaske oder auf der zweiten Seite der Insektenschutzmaske angeordnet. Dies hat den Vorteil, dass der Umfang der Insektenschutzmaske nur einmalig auf den Kopfumfang eingestellt werden muss und dennoch ein Anlegen und Abnehmen der Insektenschutzmaske durch Schließen und Öffnen der Schließvorrichtung besonders leicht möglich ist. Das elastische Band und die erste Arretiervorrichtung werden somit nicht über die Schließvorrichtung geführt, sondern befinden sich entweder auf der ersten Seite oder auf der zweiten Seite der durch die Schließvorrichtung zu verbindenden Seiten der Insektenschutzmaske.

Aufgrund der schnellen und einfachen Verschlussmöglichkeit und Öffnungsmöglichkeit, ist die Schließvorrichtung vorteilhafterweise ausgewählt aus einem Klettverschluss, einem Reißverschluss, einem Hakenverschluss oder einem Knopfverschluss.

Weiter vorteilhaft ist die Schließvorrichtung ein Reißverschluss und die Insektenschutzmaske umfasst ferner ein Abdeckband, das an der ersten Seite der Insektenschutzmaske angeordnet ist. Darüber hinaus umfasst die Insektenschutzmaske einen zweiten Druckknopf, wobei ein Oberteil oder Unterteil des zweiten Druckknopfes am Abdeckband und hierbei insbesondere an einem freiliegenden Endabschnitt des Abdeckbands, und ein dazu korrespondierendes Unterteil oder Oberteil des zweiten Druckknopfes an der zweiten Seite der Insektenschutzmaske angeordnet ist, so dass ein Verschlussgriff des Reißverschlusses im geschlossenen Zustand des Reißverschlusses und im geschlossenen Zustand des zweiten Druckknopfes durch das Abdeckband verdeckt wird. Dies verhindert ein unbeabsichtigtes Öffnen des Reißverschlusses.

Alternativ kann das Abdeckband auch an der zweiten Seite der Insektenschutzmaske und das Oberteil oder Unterteil des zweiten Druckknopfes am Abdeckband und das dazu korrespondierende Unterteil oder Oberteil des zweiten Druckknopfes an der ersten Seite der Insektenschutzmaske angeordnet sein. Auch in diesem Fall wird der Verschlussgriff des Reißverschlusses im geschlossenen Zustand des Reißverschlusses und im geschlossenen Zustand des zweiten Druckknopfes durch das Abdeckband verdeckt.

Darüber hinaus vorteilhaft ist die erste Einstellvorrichtung an einem ersten Ende in Längsrichtung der Insektenschutzmaske vorgesehen, wobei das erste Ende insbesondere einen Nasenbereich des Equiden darstellt. Der Nasenbereich erstreckt sich dabei entlang des Nasenrückens von unterhalb der Augen bis zu den weichen Teilbereichen der Nase und endet insbesondere oberhalb der Nüstern und damit am knochenunterstützten Bereich des Nasenbeins des Equiden. Gerade am Nasenbereich ist ein auf den Umfang desselben einstellbarer Insektenschutz besonders wichtig, da hier durch die Unterkieferäste Schlupflöcher für Insekten vorhanden sind, die nur durch eine gezielte Einstellung der Umfangsweite der Insektenschutzmaske in diesem Bereich effektiv an einem Eindringen in die Insektenschutzmaske gehindert und Scheuerstellen sowie ein ungewolltes Abstreifen der Insektenschutzmaske verhindert werden können.

Eine weitere vorteilhafte Weiterbildung ist dadurch gekennzeichnet, dass die Insektenschutzmaske ferner eine zweite Einstellvorrichtung umfasst, wobei die zweite Einstellvorrichtung an einem in Umfangsrichtung dritten Teilabschnitt ein elastisches Band und an einem in Umfangsrichtung vierten Teilabschnitt, eine zweite Arretiervorrichtung umfasst, wobei eine Länge des elastischen Bands durch die zweite Arretiervorrichtung fixiert wird. Die zweite Einstellvorrichtung kann dabei wie die erste Einstellvorrichtung ausgebildet nur räumlich in einem anderen Bereich der Insektenschutzmaske angeordnet sein. Hierdurch kann die Länge des Umfangs der Insektenschutzmaske in einem weiteren Bereich variabel eingestellt werden, so dass auch dort ein Eindringen von Insekten in die Insektenschutzmaske besonders effektiv verhindert wird. In Bezug auf die einzelnen Ausgestaltungsmöglichkeiten der zweiten Einstellvorrichtung wird ergänzend Bezug genommen auf die Ausführungen zur ersten Einstellvorrichtung.

Besonders vorteilhaft ist die zweite Einstellvorrichtung an einem zweiten Ende in Längsrichtung der Insektenschutzmaske vorgesehen, wobei das zweite Ende insbesondere einen Genickbereich oder einen Ganaschenbereich des Equiden darstellt. Der Genickbereich bzw. Ganaschenbereich eines Equiden umfasst oftmals eine Verjüngung zwischen dem Kopfbereich und dem sich anschließenden Halsbereich, so dass eine Reduzierung des Umfangs einer Insektenschutzmaske in diesem Bereich besonders effektiv ist, um ein ungewolltes Abstreifen der Insektenschutzmaske durch den Equiden und auch ein Eindringen von Insekten zu verhindern.

Des Weiteren vorteilhaft umfasst die Insektenschutzmaske einen Ohrenbereich und einen Augenbereich, wobei der Ohrenbereich und/oder der Augenbereich aus einem Meshmaterial und übrige Bereiche der Insektenschutzmaske vorzugsweise aus einem elastischen textilen Material gebildet sind. Dies verbessert die Passform und erhöht den Tragekomfort der Insektenschutzmaske.

Gemäß einer Ausführungsform kann der Ohrenbereich frei liegen und lediglich der Augenbereich aus einem Meshmaterial gebildet sein. Diese Ausführungsform ist dann bevorzugt, wenn insbesondere die Augen des Equiden geschützt werden sollen. Dies ist oftmals bei einer Überempfindlichkeit der Augen gegenüber Sonnenlicht zu empfehlen.

Alternativ dazu kann auch nur der Ohrenbereich mit einem Meshmaterial versehen sein und der Augenbereich freiliegen. Dies schützt somit insbesondere die Ohren des Equiden gegen einen Befall mit Insekten. Für einen weiter verbesserten Tragekomfort kann der Ohrenbereich auch aus einem hochelastischen Material, wie z.B. Lycra, gebildet sein.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: eine Seitenansicht einer Insektenschutzmaske gemäß einer ersten Ausführungsform,
- Fig. 2: eine Unteransicht der Insektenschutzmaske aus Figur 1 und
- Fig. 3: eine Unteransicht einer Insektenschutzmaske gemäß einer zweiten Ausführungsform.

In den Figuren sind nur die wesentlichen Merkmale der vorliegenden Erfindung dargestellt. Alle übrigen Merkmale sind der Übersichtlichkeit halber weggelassen. Ferner beziffern gleiche Bezugszeichen gleiche Komponenten.

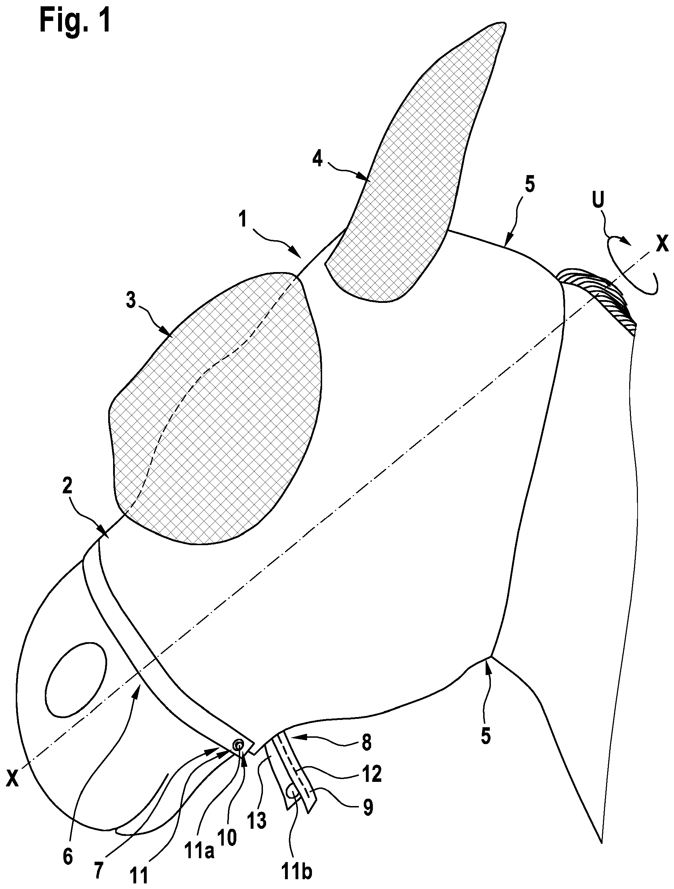

Im Detail zeigt Figur 1 eine Insektenschutzmaske 1 in Seitenansicht. Die Insektenschutzmaske 1 umfasst einen Nasenbereich 2, einen Augenbereich 3, einen Ohrenbereich 4 und einen Genickbereich bzw. Ganaschenbereich 5. Diese Bereiche sind insbesondere durch ein elastisches Material miteinander verbunden. Das elastische Material sorgt für eine gute Passform und einen hohen Tragekomfort. Der Augenbereich 3 und der Ohrenbereich 4 umfassen beispielhaft ein Meshmaterial, wobei das Meshmaterial im Augenbereich 3 so ausgestaltet ist, dass eine Durchsicht erleichtert ist. Das Meshmaterial im Augenbereich 3 ist damit semitransparent. Der Ohrenbereich 4 kann auch aus einem elastischen Material, wie z.B. Lycra gebildet sein. Auch können der Augenbereich 3 und/oder der Ohrenbereich, je nach Schutzbedürftigkeit des Equiden, freiliegen.

Die Insektenschutzmaske 1 umfasst im Nasenbereich 2, und hierunter insbesondere an einem ersten Ende 6 in Längsrichtung X-X der Insektenschutzmaske 1, eine erste Einstellvorrichtung 7 zum Einstellen eines Umfangs der Insektenschutzmaske 1 im Nasenbereich 2.

Die erste Einstellvorrichtung 7 umfasst an einem in Umfangsrichtung U ersten Teilabschnitt 8 der Insektenschutzmaske 1 ein elastisches Band 9 und an einem in Umfangsrichtung U zweiten Teilabschnitt 10 der Insektenschutzmaske 1, eine erste Arretiervorrichtung 11.

Eine Länge des elastischen Bands 9 und damit eine Umfangslänge der Insektenschutzmaske 1 im Nasenbereich 2 wird durch die erste Arretiervorrichtung 11 fixiert.

Hierzu ist das elastische Band 9 als Lochband ausgebildet, das entlang einer Länge des Lochbands mehrere schlitzartige Öffnungen 12 umfasst. Das elastische Band 9 ist dabei mindestens teilweise in einem Saum entlang des Umfangs der Insektenschutzmaske 1 geführt. Das elastische Band 9 ist vorzugsweise mit einem Endabschnitt am ersten Teilabschnitt 8, z.B. durch Vernähen im Saum, fixiert. Der erste Teilabschnitt 8 kann sich über weite Teile des Umfangs erstrecken, so dass das elastische Band 9 über einen weiten Teilbereich des Umfangs gleichmäßig in seiner Länge eingestellt werden kann. So werden Druckspitzen im empfindlichen Nasenbereich 2 des Equiden besonders gut verhindert.

Die Arretiervorrichtung 11 ist beispielhaft in Form eines Druckknopfs ausgebildet. Der Druckknopf umfasst ein Unterteil 11a, das beispielhaft am zweiten Teilabschnitt 10 angeordnet ist und ein Oberteil 11b, das am Ende eines Abdeckbands 13 am ersten Teilabschnitt 8 befestigt ist. Zum Reduzieren einer Umfangslänge der Insektenschutzmaske 1 durch Verwendung der ersten Einstellvorrichtung 7, wird das elastische Band 9 durch Zug expandiert und der erste Teilabschnitt 8 näher an den zweiten Teilabschnitt 10 herangezogen. Dieses nun gestraffte Lochband wird sodann in seiner Länge dadurch fixiert, dass das Unterteil 11a des Druckknopfes durch eine der Öffnungen 12 im Lochband geführt und das Unterteil 11a des Druckknopfes sodann mit dem Oberteil 11b des Druckknopfes, das am Abdeckband 13 angeordnet ist, insbesondere durch Kraftschluss und/oder Formschluss verbunden wird.

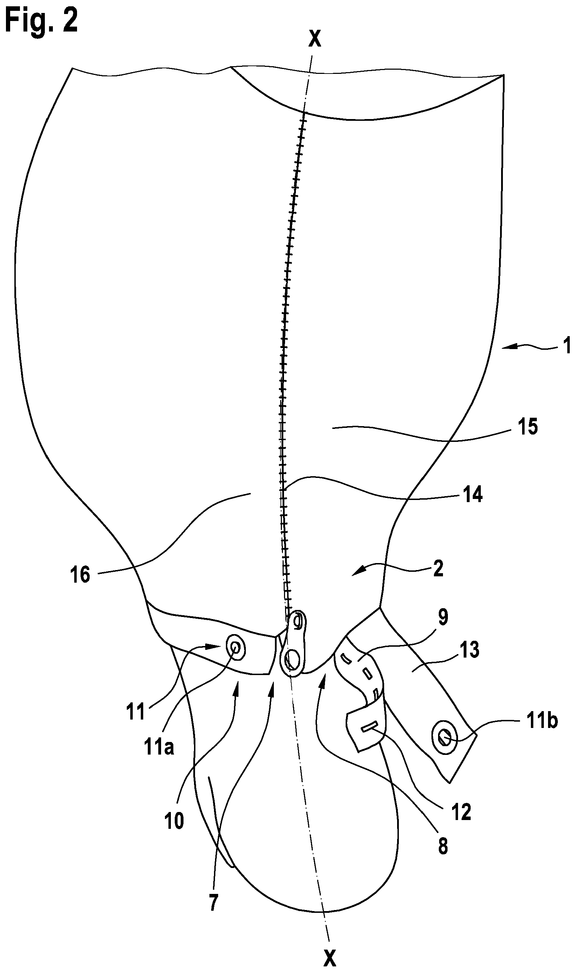

Figur 2 zeigt die Insektenschutzmaske 1 aus Figur 1 von unten, also im angezogenen Zustand an einem Equiden von der Unterseite des Kopfes des Equiden. Auch hier sind die erste Einstellvorrichtung 7, die am ersten Teilabschnitt 8 ein elastisches Band 9 in Form eines Lochbands und am zweiten Teilabschnitt 10 die erste Arretiervorrichtung 11 umfasst, gut zu erkennen. Die erste Arretiervorrichtung 11, die in Form eines Druckknopfes mit einem Unterteil 11a, das am zweiten Teilabschnitt 10 vorgesehen ist, und einem Oberteil 11b ausgebildet ist, das am ersten Teilabschnitt 8 vorgesehen ist, und hierbei an einem Ende des Abdeckbands13 befestigt ist, sind ebenfalls gut zu erkennen.

Ferner ist zu erkennen, dass die Insektenschutzmaske 1 eine Schließvorrichtung 14, die beispielhaft in Form eines Reißverschlusses ausgebildet ist, umfasst, wobei eine erste Seite 15 und eine zweite Seite 16 der Insektenschutzmaske 1 in Längsrichtung X-X im geschlossenen Zustand der Insektenschutzmaske 1 durch die Schließvorrichtung 14 verbunden sind.

Im geschlossenen Zustand der Insektenschutzmaske 1 sind das elastische Band 9 und die erste Arretiervorrichtung 11, die zum Schließen der ersten Arretiervorrichtung 11 das an dem Abdeckband 13 befestigte Oberteil 11b des Druckknopfes umfasst, von außen über die Schließvorrichtung 14 geführt. Dies sichert eine geschlossene Stellung der Schließvorrichtung 14 und ein ungewolltes Öffnen derselben wird effektiv verhindert.

Die Insektenschutzmaske 1 kann in einem weiteren Bereich, beispielsweise im Genickbereich 5, eine zweite Einstellvorrichtung umfassen, die insbesondere wie die erste Einstellvorrichtung 7 ausgebildet ist, so dass der Umfang der Insektenschutzmaske 1 auch im Genickbereich bzw. Ganaschenbereich 5 variabel einstellbar ist.

Die hier dargestellte Insektenschutzmaske 1 zeichnet sich durch einen hohen Tragekomfort bei gleichzeitig sehr gut und dauerhaft aber reversibel variabel einstellbarem Umfang aus, so dass auf der einen Seite ein Eindringen von Insekten in die Insektenschutzmaske über den Nasenrücken eines Equiden und auf der anderen Seite Druckstellenbildung effektiv verhindert wird. Die Insektenschutzmaske 1 weist einen an jeden Kopfumfang des Equiden einstellbaren Umfang auf, der ein dauerhaft komfortables Tragen ermöglicht und unerwünschtes und unbeabsichtigtes Abstreifen der Insektenschutzmaske unterbindet.

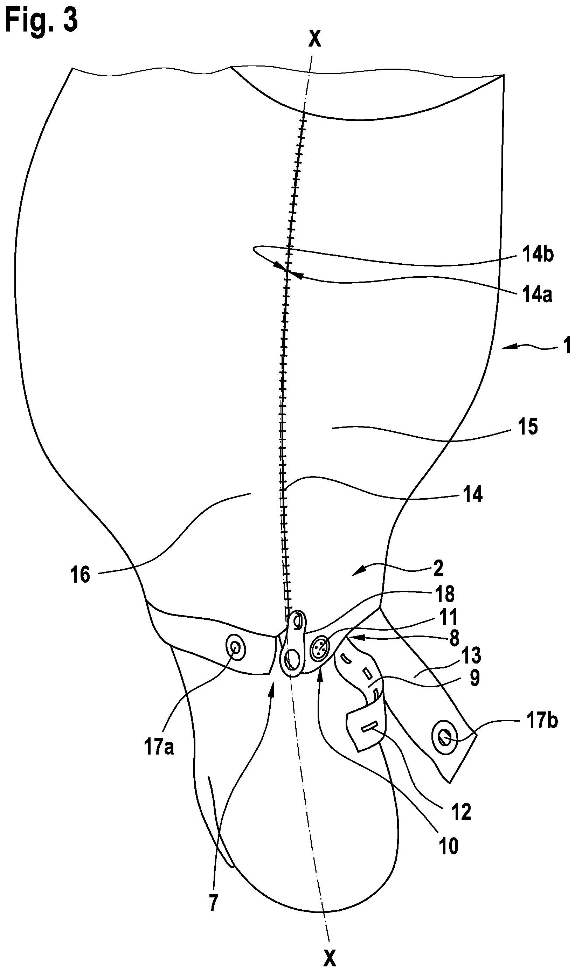

Figur 3 zeigt eine Insektenschutzmaske 1 gemäß einer zweiten Ausführungsform. Im Unterschied zu der Insektenschutzmaske 1 aus Figuren 1 und 2, sind in der Insektenschutzmaske 1 in Figur 3 die erste Arretiervorrichtung 11, die beispielhaft in Form eines Knopfes ausgebildet ist, und das elastische Band 9 auf derselben Seite der Insektenschutzmaske, und wie hier beispielhaft dargestellt, auf der ersten Seite 15 der Insektenschutzmaske 1, angeordnet. Hierdurch kann eine Einstellung des Umfangs der Insektenschutzmaske 1 durch Führen des Knopfes 11 durch eine Öffnung 12 im elastischen Band 9 unabhängig vom geschlossenen oder geöffneten Zustand der Schließvorrichtung 14 vorgenommen werden. Der gewünschte Umfang kann damit dauerhaft eingestellt werden und muss nicht bei jedem Anlegen der Insektenschutzmaske 1 neu eingestellt werden. Dies erleichtert die Handhabung der Insektenschutzmaske 1.

Wie bereits im Lichte der ersten Ausführungsform dargelegt, wird auch in der zweiten Ausführungsform die Schließvorrichtung 14, also die im geschlossenen Zustand der Schließvorrichtung 14 einen ersten Verschlussteil 14a und einen zweiten Verschlussteil 14b umfassende Schließvorrichtung 14, an einem ungewollten Öffnen gehindert. Hierzu ist wiederum ein Abdeckband 13 vorgesehen, das ein Oberteil 17b eines zweiten Druckknopfes umfasst. Auf der zweiten Seite 16 der Insektenschutzmaske 1 befindet sich ein entsprechendes Unterteil 17a des zweiten Druckknopfes, so dass nach dem Schließen des zweiten Druckknopfes im geschlossenen Zustand der als Reißverschluss ausgebildeten Schließvorrichtung 14 ein Verschlussgriff 18 des Reißverschlusses abgedeckt bzw. überdeckt wird.

Neben der vorstehenden schriftlichen Beschreibung der Erfindung wird zu deren ergänzender Offenbarung hiermit explizit auf die zeichnerische Darstellung der Erfindung in den Fig. 1 bis 3 Bezug genommen.

### Bezugszeichenliste

- 1: Insektenschutzmaske
- 2: Nasenbereich
- 3: Augenbereich
- 4: Ohrenbereich
- 5: Genickbereich / Ganaschenbereich
- 6: erstes Ende
- 7: erste Einstellvorrichtung
- 8: erster Teilabschnitt
- 9: elastisches Band
- 10: zweiter Teilabschnitt
- 11: erste Arretiervorrichtung / erster Druckknopf / Knopf
- 11a: Unterteil des ersten Druckknopfes
- 11b: Oberteil des ersten Druckknopfes
- 12: Öffnung im elastischen Band
- 13: Abdeckband
- 14: Schließvorrichtung / Reißverschluss
- 14a: erster Verschlussteil der Schließvorrichtung / des Reißverschlusses
- 14b: zweiter Verschlussteil der Schließvorrichtung / des Reißverschlusses
- 15: erste Seite der Insektenschutzmaske
- 16: zweite Seite der Insektenschutzmaske
- 17a: Unterteil des zweiten Druckknopfes
- 17b: Oberteil des zweiten Druckknopfes
- 18: Verschlussgriff des Reißverschlusses
- U: Umfangsrichtung
- X-X: Längsrichtung

## Patentansprüche

1. Insektenschutzmaske für Equiden umfassend eine erste Einstellvorrichtung (7) zum Einstellen eines Umfangs der Insektenschutzmaske (1), wobei die erste Einstellvorrichtung (7) an einem in Umfangsrichtung (U) ersten Teilabschnitt (8) der Insektenschutzmaske (1) ein elastisches Band (9) und an einem in Umfangsrichtung (U) zweiten Teilabschnitt (10) der Insektenschutzmaske (1), eine erste Arretiervorrichtung (11) umfasst, wobei ein erster Endabschnitt des elastischen Bands am ersten Teilabschnitt befestigt ist, wobei ein zweiter Endabschnitt des elastischen Bands (9) nicht mit der Insektenschutzmaske (1) fest verbunden und ausgebildet ist, entlang des Umfangs der Insektenschutzmaske zum, die Arretiervorrichtung (11) umfassenden, zweiten Teilabschnitt (10) geführt zu werden, wobei bei Anwendung der Insektenschutzmaske am Equiden das am ersten Teilabschnitt (8) vorhandene elastische Band (9) der ersten Einstellvorrichtung (7) soweit gestrafft ist, dass der Umfang der Insektenschutzmaske auf ein gewünschtes Maß reduziert ist, wobei das elastische Band (9) mittels der am zweiten Teilabschnitt (10) vorhandenen Arretiervorrichtung (11) reversibel dauerhaft fixiert ist, **dadurch gekennzeichnet, dass** eine Länge des elastischen Bands (9) durch die erste Arretiervorrichtung (11) fixiert wird, und dass das elastische Band (9) in einem Saum geführt ist,

2. Insektenschutzmaske nach Anspruch 1, wobei die erste Arretiervorrichtung (11) in einem Saum geführt ist.

3. Insektenschutzmaske nach Anspruch 1 oder 2, wobei die erste Arretiervorrichtung (11) einen Knopf, einen Stift, eine Klammer, einen Haken oder einen Klettverschluss umfasst.

4. Insektenschutzmaske nach Anspruch 3, wobei der Knopf ein erster Druckknopf ist, und wobei ein Unterteil (11a) oder ein Oberteil (11b) des ersten Druckknopfs am zweiten Teilabschnitt (10) angeordnet ist oder
wobei die erste Arretiervorrichtung (11) ein Klettverschluss ist und eine erste Haftseite des Klettverschlusses am zweiten Teilabschnitt (10) angeordnet ist und das elastische Band (9) eine zweite Haftseite des Klettverschlusses umfasst.

5. Insektenschutzmaske nach einem der vorhergehenden Ansprüche, wobei das elastische Band (9) ein Lochband ist.

6. Insektenschutzmaske nach einem der Ansprüche 1 bis 3, wobei das elastische Band (9) ein Lochband ist und die erste Arretiervorrichtung (11) ein Knopf, ein Stift, eine Klammer oder ein Haken ist, wobei der Knopf, der Stift, die Klammer oder der Haken zum Fixieren der Länge des elastischen Bands (9) durch eine Öffnung (12) im Lochband führbar ist.

7. Insektenschutzmaske nach einem der vorhergehenden Ansprüche, ferner umfassend eine Schließvorrichtung (14), die die Insektenschutzmaske (1) in Längsrichtung (X-X) teilt bzw. verbindet,
wobei insbesondere das elastische Band (9) und/oder die erste Arretiervorrichtung (11) im geschlossenen Zustand der Schließvorrichtung (14) über die Schließvorrichtung (14) geführt ist oder
wobei insbesondere im geschlossenen Zustand der Schließvorrichtung (14) eine erste Seite (15) und eine zweite Seite (16) der Insektenschutzmaske (1) durch die Schließvorrichtung (14) miteinander verbunden sind, wobei ein erster Verschlussteil (14a) der Schließvorrichtung (14) entlang eines Randes der ersten Seite (15) in Längsrichtung (X-X) der Insektenschutzmaske (1) angeordnet ist und ein zum ersten Verschlussteil (14a) korrespondierendes zweites Verschlussteil (14b) der Schließvorrichtung (14) entlang eines Randes der zweiten Seite (16) in Längsrichtung (X-X) der Insektenschutzmaske (1) angeordnet ist und wobei das elastische Band (9) und die erste Arretiervorrichtung (11) auf der ersten Seite (15) der Insektenschutzmaske (1) oder auf der zweiten Seite (16) der Insektenschutzmaske (1) angeordnet sind.

8. Insektenschutzmaske nach Anspruch 7, wobei die Schließvorrichtung (14) ausgewählt ist aus einem Klettverschluss, einem Reißverschluss, einem Hakenverschluss oder einem Knopfverschluss.

9. Insektenschutzmaske nach Anspruch 8, wobei die Schließvorrichtung (14) ein Reißverschluss ist und die Insektenschutzmaske (1) ferner ein Abdeckband (13), das an der ersten Seite (15) der Insektenschutzmaske (1) angeordnet ist, und einen zweiten Druckknopf umfasst, wobei ein Oberteil oder Unterteil (17a, 17b) des zweiten Druckknopfes am Abdeckband (13) und ein Unterteil oder Oberteil (17b, 17a) des zweiten Druckknopfes an der zweiten Seite (16) der Insektenschutzmaske (1) angeordnet ist, so dass ein Verschlussgriff (18) des Reißverschlusses (14) im geschlossenen Zustand des Reißverschlusses (14) und im geschlossenen Zustand des zweiten Druckknopfes durch das Abdeckband (13) verdeckt wird oder
wobei die Schließvorrichtung (14) ein Reißverschluss ist und die Insektenschutzmaske (1) ferner ein Abdeckband (13), das an der zweiten Seite (16) der Insektenschutzmaske (1) angeordnet ist, und einen zweiten Druckknopf umfasst, wobei ein Oberteil oder Unterteil (17a, 17b) des zweiten Druckknopfes am Abdeckband (13) und ein Unterteil oder Oberteil (17b, 17a) des zweiten Druckknopfes an der ersten Seite (15) der Insektenschutzmaske (1) angeordnet ist, so dass ein Verschlussgriff (18) des Reißverschlusses (14) im geschlossenen Zustand des Reißverschlusses (14) und im geschlossenen Zustand des zweiten Druckknopfes durch das Abdeckband (13) verdeckt wird.

10. Insektenschutzmaske nach einem der vorhergehenden Ansprüche, wobei die erste Einstellvorrichtung (7) an einem ersten Ende (6) in Längsrichtung (X-X) der Insektenschutzmaske (1) vorgesehen ist, wobei das erste Ende (6) insbesondere einen Nasenbereich (2) des Equiden darstellt,
wobei die Insektenschutzmaske (1) insbesondere ferner eine zweite Einstellvorrichtung umfasst, wobei die zweite Einstellvorrichtung an einem in Umfangsrichtung (U) dritten Teilabschnitt ein elastisches Band und an einem in Umfangsrichtung (U) vierten Teilabschnitt, eine zweite Arretiervorrichtung umfasst, wobei eine Länge des elastischen Bands durch die zweite Arretiervorrichtung fixiert wird,
wobei insbesondere die zweite Einstellvorrichtung an einem zweiten Ende in Längsrichtung (X-X) der Insektenschutzmaske (1) vorgesehen ist, wobei das zweite Ende insbesondere einen Genickbereich oder Ganaschenbereich des Equiden darstellt und/oder wobei die Insektenschutzmaske einen Ohrenbereich (4) und einen Augenbereich (3) umfasst,
wobei der Ohrenbereich (4) und/oder der Augenbereich (3) insbesondere aus einem Meshmaterial und übrige Bereiche der Insektenschutzmaske (1) insbesondere aus einem elastischen textilen Material gebildet sind.

## Claims

1. Insect protection mask for equidae comprising a first adjusting device (7) for adjusting a circumference of the insect protection mask (1), wherein the first adjusting device (7) comprises an elastic band (9) on a first partial section (8) of the insect protection mask (1) in the circumferential direction (U) and a first locking device (11) on a second partial section (10) of the insect protection mask (1) in the circumferential direction (U), wherein a first end section of the elastic band is fastened to the first partial section,
wherein a second end section of the elastic band (9) is not fixedly connected to the insect protection mask (1) and is designed to be guided along the circumference of the insect protection mask to the second partial section (10) comprising the locking device (11), wherein, when the insect protection mask is applied to the equidae, the elastic band (9) of the first adjusting device (7) present on the first partial section (8) is tightened to such an extent that the circumference of the insect protection mask is reduced to a desired extent, wherein the elastic band (9) is reversibly permanently fixed by means of the locking device (11) present on the second partial section (10),
**characterized in that** a length of the elastic band (9) is fixed by the first locking device (11), and **in that** the elastic band (9) is guided in a seam.

2. Insect protection mask according to Claim 1, wherein the first locking device (11) is guided in a seam.

3. Insect protection mask according to Claim 1 or 2, wherein the first locking device (11) comprises a button, a pin, a clip, a hook or a hook-and-loop fastener.

4. Insect protection mask according to Claim 3, wherein the button is a first pushbutton, and wherein a lower part (11a) or an upper part (11b) of the first pushbutton is arranged on the second partial section (10), or
wherein the first locking device (11) is a hook-and-loop fastener and a first adhesive side of the hook-and-loop fastener is arranged on the second partial section (10) and the elastic band (9) comprises a second adhesive side of the hook-and-loop fastener.

5. Insect protection mask according to one of the preceding claims, wherein the elastic band (9) is a perforated band.

6. Insect protection mask according to one of Claims 1 to 3, wherein the elastic band (9) is a perforated band and the first locking device (11) is a button, a pin, a clip or a hook, wherein the button, the pin, the clip or the hook can be guided through an opening (12) in the perforated band in order to fix the length of the elastic band (9).

7. Insect protection mask according to one of the preceding claims, further comprising a closing device (14) which divides or connects the insect protection mask (1) in the longitudinal direction (X-X),
wherein in particular the elastic band (9) and/or the first locking device (11) is/are guided over the closing device (14) in the closed state of the closing device (14), or
wherein in particular in the closed state of the closing device (14) a first side (15) and a second side (16) of the insect protection mask (1) are connected to one another by the closing device (14), wherein a first closure part (14a) of the closing device (14) is arranged along an edge of the first side (15) in the longitudinal direction (X-X) of the insect protection mask (1) and a second closure part (14b) of the closing device (14) corresponding to the first closure part (14a) is arranged along an edge of the second side (16) in the longitudinal direction (X-X) of the insect protection mask (1), and wherein the elastic band (9) and the first locking device (11) are arranged on the first side (15) of the insect protection mask (1) or on the second side (16) of the insect protection mask (1).

8. Insect protection mask according to Claim 7, wherein the closing device (14) is selected from a hook-and-loop fastener, a zip fastener, a hook fastener or a button fastener.

9. Insect protection mask according to Claim 8, wherein the closing device (14) is a zip fastener and the insect protection mask (1) further comprises a cover band (13) which is arranged on the first side (15) of the insect protection mask (1), and a second pushbutton, wherein an upper part or lower part (17a, 17b) of the second pushbutton is arranged on the cover band (13) and a lower part or upper part (17b, 17a) of the second pushbutton is arranged on the second side (16) of the insect protection mask (1), such that a closure handle (18) of the zip fastener (14) is concealed by the cover band (13) in the closed state of the zip fastener (14) and in the closed state of the second pushbutton, or
wherein the closing device (14) is a zip fastener and the insect protection mask (1) further comprises a cover band (13) which is arranged on the second side (16) of the insect protection mask (1), and a second pushbutton, wherein an upper part or lower part (17a, 17b) of the second pushbutton is arranged on the cover band (13) and a lower part or upper part (17b, 17a) of the second pushbutton is arranged on the first side (15) of the insect protection mask (1), such that a closure handle (18) of the zip fastener (14) is concealed by the cover band (13) in the closed state of the zip fastener (14) and in the closed state of the second pushbutton.

10. Insect protection mask according to one of the preceding claims, wherein the first adjusting device (7) is provided at a first end (6) in the longitudinal direction (X-X) of the insect protection mask (1), wherein the first end (6) in particular constitutes a nose region (2) of the equidae,
wherein the insect protection mask (1) in particular further comprises a second adjusting device, wherein the second adjusting device comprises an elastic band on a third partial section in the circumferential direction (U) and a second locking device on a fourth partial section in the circumferential direction (U), wherein a length of the elastic band is fixed by the second locking device,
wherein in particular the second adjusting device is provided at a second end in the longitudinal direction (X-X) of the insect protection mask (1), wherein the second end in particular constitutes a knot region or ganash region of the equidae and/or wherein the insect protection mask comprises an ear region (4) and an eye region (3),
wherein the ear region (4) and/or the eye region (3) are formed in particular from a mesh material and remaining regions of the insect protection mask (1) are formed in particular from an elastic textile material.

## Revendications

1. Masque anti-insectes pour équidés comprenant un premier dispositif de réglage (7) pour régler une circonférence du masque anti-insectes (1), dans lequel le premier dispositif de réglage (7) comprend une bande élastique (9) sur une première section partielle (8) du masque anti-insectes (1) dans le sens circonférentiel (U) et un premier dispositif d'arrêt (11) sur une deuxième section partielle (10) du masque anti-insectes (1) dans le sens circonférentiel (U), dans lequel une première section d'extrémité de la bande élastique est fixée sur la première section partielle,
dans lequel une deuxième section d'extrémité de la bande élastique (9) n'est pas reliée de manière solidaire au masque anti-insectes (1) et est réalisée pour être guidée le long de la circonférence du masque anti-insectes jusqu'à la deuxième section partielle (10) comprenant le dispositif d'arrêt (11), dans lequel, lors de l'utilisation du masque anti-insectes sur l'équidé, la bande élastique (9) présente sur la première section partielle (8) du premier dispositif de réglage (7) est tendue jusqu'à ce que la circonférence du masque anti-insectes soit réduite à une dimension souhaitée, dans lequel la bande élastique (9) est fixée durablement de manière réversible au moyen du dispositif d'arrêt (11) présent sur la deuxième section partielle (10),
**caractérisé en ce qu'**une longueur de la bande élastique (9) est fixée par le premier dispositif d'arrêt (11), et que la bande élastique (9) est guidée dans un ourlet.

2. Masque anti-insectes selon la revendication 1, dans lequel le premier dispositif d'arrêt (11) est guidé dans un ourlet.

3. Masque anti-insectes selon la revendication 1 ou 2, dans lequel le premier dispositif d'arrêt (11) comprend un bouton, une goupille, une pince, un crochet ou une fermeture auto-agrippante.

4. Masque anti-insectes selon la revendication 3, dans lequel le bouton est un premier bouton-pression, et dans lequel une partie inférieure (11a) ou une partie supérieure (11b) du premier bouton-pression est disposée sur la deuxième section partielle (10) ou
dans lequel le premier dispositif d'arrêt (11) est une fermeture autoagrippante, un premier côté d'adhérence de la fermeture auto-agrippante est disposé sur la deuxième section partielle (10), et la bande élastique (9) comprend un deuxième côté d'adhérence de la fermeture auto-agrippante.

5. Masque anti-insectes selon l'une quelconque des revendications précédentes, dans lequel la bande élastique (9) est une bande perforée.

6. Masque anti-insectes selon l'une quelconque des revendications 1 à 3, dans lequel la bande élastique (9) est une bande perforée et le premier dispositif d'arrêt (11) est un bouton, une goupille, une pince ou un crochet, dans lequel le bouton, la goupille, la pince ou le crochet peut être guidé(e) à travers une ouverture (12) dans la bande perforée pour la fixation de la longueur de la bande élastique (9).

7. Masque anti-insectes selon l'une quelconque des revendications précédentes, comprenant en outre un dispositif de fermeture (14) qui divise ou relie le masque anti-insectes (1) dans le sens longitudinal (X-X),
dans lequel, en particulier, la bande élastique (9) et/ou le premier dispositif d'arrêt (11) sont guidés dans l'état fermé du dispositif de fermeture (14) par-dessus le dispositif de fermeture (14) ou
dans lequel, en particulier lorsque le dispositif de fermeture (14) est en position fermée, un premier côté (15) et un deuxième côté (16) du masque anti-insectes (1) sont reliés l'un à l'autre par le dispositif de fermeture (14), dans lequel une première partie de fermeture (14a) du dispositif de fermeture (14) est disposée le long d'un bord du premier côté (15) dans le sens longitudinal (X-X) du masque anti-insectes (1), et une deuxième partie de fermeture (14b) du dispositif de fermeture (14), correspondant à la première partie de fermeture (14a), est disposée le long d'un bord du deuxième côté (16) dans le sens longitudinal (X-X) du masque anti-insectes (1) et la bande élastique (9) et le premier dispositif d'arrêt (11) sont disposés sur le premier côté (15) du masque anti-insectes (1) ou sur le deuxième côté (16) du masque anti-insectes (1).

8. Masque anti-insectes selon la revendication 7, dans lequel le dispositif de fermeture (14) est choisi parmi une fermeture auto-agrippante, une fermeture éclair, une fermeture à crochet ou une fermeture à bouton.

9. Masque anti-insectes selon la revendication 8, dans lequel le dispositif de fermeture (14) est une fermeture éclair et le masque anti-insectes (1) comprend en outre une bande de recouvrement (13), qui est disposée sur le premier côté (15) du masque anti-insectes (1), et comprend un deuxième bouton-pression, dans lequel une partie supérieure ou une partie inférieure (17a, 17b) du deuxième bouton-pression est disposée sur la bande de recouvrement (13) et une partie inférieure ou une partie supérieure (17b, 17a) du deuxième bouton-pression est disposée sur le deuxième côté (16) du masque anti-insectes (1), de telle sorte qu'une poignée de fermeture (18) de la fermeture éclair (14) est masquée par la bande de recouvrement (13) dans l'état fermé de la fermeture éclair (14) et dans l'état fermé du deuxième bouton-pression ou
dans lequel le dispositif de fermeture (14) est une fermeture éclair et le maque anti-insectes (1) comprend en outre une bande de recouvrement (13), qui est disposée sur le deuxième côté (16) du masque anti-insectes (1), et un deuxième bouton-pression, dans lequel une partie supérieure ou une partie inférieure (17a, 17b) du deuxième bouton-pression est fixée sur la bande de recouvrement (13) et une partie inférieure ou une partie supérieure (17b, 17a) du deuxième bouton-pression est située sur le premier côté (15) du masque anti-insectes (1), de telle sorte qu'une poignée de fermeture (18) de la fermeture éclair (14) est masquée par la bande de recouvrement (13) dans l'état fermé de la fermeture éclair (14) et dans l'état fermé du deuxième bouton-pression.

10. Masque anti-insectes selon l'une quelconque des revendications précédentes, dans lequel le premier dispositif de réglage (7) est prévu sur une première extrémité (6) dans le sens longitudinal (X-X) du masque anti-insectes (1), dans lequel la première extrémité (6) représente en particulier une zone nasale (2) de l'équidé,
dans lequel le maque anti-insectes (1) comprend en particulier en outre un deuxième dispositif de réglage, dans lequel le deuxième dispositif de réglage comprend une bande élastique sur une troisième section partielle dans le sens circonférentiel (U) et un deuxième dispositif d'arrêt sur une quatrième section partielle dans le sens circonférentiel (U), dans lequel la longueur de la bande élastique est fixée par le deuxième dispositif d'arrêt,
dans lequel, en particulier, le deuxième dispositif de réglage est prévu sur une deuxième extrémité dans le sens longitudinal (X-X) du masque anti-insectes (1), dans lequel la deuxième extrémité représente en particulier une zone de joue ou une zone de ganache de l'équidé et/ou dans lequel le masque anti-insectes comprend une zone d'oreille (4) et une zone d'œil (3),
dans lequel la zone d'oreille (4) et/ou la zone d'œil (3) sont formées en particulier à partir d'un matériau en maille, et les autres zones du masque anti-insectes (1) sont formées en particulier à partir d'un matériau textile élastique.
